# EUROPEAN PATENT APPLICATION

(11) **EP 4 850 997 A1**
(43) Date of publication of application: **09.12.2026**
(21) Application number: 25180583.4
(22) Date of filing: 03.06.2025
(51) Int. Cl.: B60W 30/02, B60W 20/11, B60W 30/18, B60W 50/00, B60W 50/14, B60W 50/16

(54) **A METHOD OF CONTROLLING A VEHICLE IN A HANDLING LIMIT CONDITION**

(71) Applicant: TOYOTA JIDOSHA KABUSHIKI KAISHA, Toyota-shi, Aichi-ken 471-8571 (JP)
(72) Inventor: RIOS LAZCANO, Andrea Michelle, 1140 BRUSSELS (BE); GOMEZ MENA, Carmen, 1140 BRUSSELS (BE)
(74) Representative: Cabinet Beau de Loménie

(57) **Abstract**

The disclosure notably relates to a computer-implemented method for controlling a vehicle in a handling limit condition by a driver assistance system of the vehicle. The method comprises providing a model of said vehicle. The model is configured to model dynamics of the vehicle using one or more state variables. The method further comprises one or more iterations of predicting, over a time horizon, a behavior of the one or more state variables based on the provided model; detecting a handling limit condition for the vehicle in the time horizon based on the predicted behavior; and sending a feedback signal to a driver based on the detected handling limit condition. The feedback signal is modulated based on a degree of the detected handling limit condition.

## Description

### BACKGROUND OF THE INVENTION

### 1. Field of the invention

The present disclosure relates to methods and systems of controlling a vehicle in a handling limit condition by a driver assistance system of the vehicle.

### 2. Description of Related Art

The automotive industry continuously strives for higher standards in road safety and user comfort, driven in large part by the advancement of Advanced Driver Assistance Systems (ADAS) (see Refs. [1, 2]). These systems can warn the driver of potential dangers or even automate certain driving tasks. While merely alerting a driver may be insufficient in handling certain dangerous situations, over-automation of driving tasks may invoke risks. Recent developments like Haptic Shared Control (HSC) as proposed in Ref. [3], are known to reduce the risk of over-reliance on automation by keeping the driver in-the-loop (as discussed in Ref. [4]).

However, in scenarios like handling limit conditions where the vehicle's response to the driver's inputs becomes less predictable and raises the risk of loss of control and accidents (as discussed in Refs. [5, 6]), the known HSC methods are not sufficiently developed. Oversteering as an example of handling limit conditions is a particularly dangerous situation and the seventh leading cause of fatal crashes (see Ref. [7]). Oversteering happens when the rear tires lose traction and slide outward when accelerating in a corner. In such situations, accidents typically occur when drivers perceive that they have turned the wheel too far and too quickly, and they over-compensate by quickly turning the wheel in the opposite direction, causing a total loss of control. Controlling these extreme oversteer situations needs a precise steering and throttle inputs which keeps it a difficult task for less experienced drivers. Understeering, as another example of handling limit conditions, happens when a vehicle turns less than what the driver commands. While being less fatal, it remains important to aid the driver to control an understeering.

Accordingly, there is still a need to methods for controlling a vehicle in a handling limit condition and/or guiding the driver in controlling a handling limit condition.

### SUMMARY

In this respect, the present disclosure relates to a computer-implemented method for controlling a vehicle in a handling limit condition by a driver assistance system of the vehicle. The method comprises providing a model of said vehicle. The model is configured to model dynamics of the vehicle using one or more state variables. The method further comprises one or more iterations of:
- predicting, over a time horizon, a behavior of the one or more state variables based on the provided model;
- detecting a handling limit condition for the vehicle in the time horizon based on the predicted behavior; and
- sending a feedback signal to a driver based on the detected handling limit condition.
The feedback signal is modulated based on a degree of the detected handling limit condition.

This constitutes a method of guiding the driver in controlling the vehicle in a handling limit condition via sending feedback signals which are modulated according to a degree of the handling limit condition. The degrees of handling limit condition are determined based on the prediction (e.g., by a controller) according to the driver's input. This establishes a continuous assessment of the performance to provide the driver with appropriate guidance.

Unless otherwise stated, each of the words "example", "embodiment", and "optionally" is used herein to refer to one or more optional features provided in some embodiments and not provided in other embodiments. Any particular embodiment of the invention may include a plurality of such features unless such features conflict. The scope of the present invention is defined by the appended claims. Unless otherwise stated, all aspects, examples, and embodiments described herein are compatible with each other.

In the present disclosure, when a noun is written followed by '(s)', it means that the considered object or item can be in the singular or plural form. For instance, the expression 'object(s)' means 'at least one object'. Accordingly, a sentence like 'Object(s) are present' includes the singular form, that is, it encompasses the case where a single object is present. Furthermore, a function or variable 'based on a value' or calculated from a value' means that at least said value is used to calculate the variable or the output of the function (the variable or the output of the function is often also a function of other values).

In this disclosure, by "providing" an element it is meant obtaining or receiving said element by the method. The method may provide said model by accessing local storage (e.g., a hard disk or a RAM) or remote storage (e.g., a cloud service).

The proposed method can be implemented in many different ways in order to obtain various levels of performance.

In examples, each iteration may further comprise receiving, from a driver, an input signal; and controlling the vehicle in the determined handling limit condition at least partially based on the received input signal. This further improves the proposed method of providing continuous control of the vehicle using the driver's input signals in an interactive way.

The method in these examples provides continuous interaction between the driver, provided with a feedback signal regarding the handling limit condition for the vehicle, and the car. In this way, the method keeps the driver active in controlling the car, while providing the driver with feedback. This improves the control of the vehicle by constituting a guide to the driver on how to control the vehicle in the handling limit conditions. Such a guide also helps the driver learn how to control the vehicle in handling limit conditions.

In examples, controlling the vehicle at least partially based on the received input signal may comprise computing an assistive control signal, and applying the computed assistive control signal to the vehicle. The received input signal from a driver may comprise a driver torque applied by the driver to a steering unit of the vehicle. Alternatively, or additionally, the received input signal from a driver may comprise a driver acceleration signal and/or a braking signal applied to an operation member of the vehicle. The computed assistive control signal may comprise an assistive torque to be applied to the steering unit of the vehicle in addition to the driver torque. Alternatively, or additionally, the computed assistive control signal may comprise an assistive acceleration signal and/or the assistive braking signal to be applied to the vehicle in addition to the driver acceleration signal and/or the driver braking signal.

The method in these examples provides an improved control of the vehicle using an assistive control signal further to the manual control of the driver, i.e., the driver torque, the driver acceleration, and the driver braking signal. In other words, the method computes and applies a correction of the steering, acceleration, and braking command of the driver. Therefore, such examples provide a correction to the driver's command while maintaining the active role of a driver in controlling the vehicle,

In examples, the predicting of the behavior of the one or more state variables may comprise minimizing a cost function using Model Predictive Control (MPC). The cost function may comprise terms tending to minimize a difference, over a plurality of samples in the time horizon, between a value of, or a value of a time derivative of, at least one state variable of the one or more state variables and a respective reference value for said at least one state variable, or respectively a reference value of the time derivative of said at least one state variable. In other words, the cost function may comprise terms tending to minimize a difference, over a plurality of samples in the time horizon, between a value of at least one state variable of the one or more state variables and a respective reference value for said at least one state variable. Alternatively, or additionally, the cost function may comprise terms tending to minimize a difference, over a plurality of samples in the time horizon, between a value of a time derivative of at least one state variable of the one or more state variables and a respective reference value of the time derivative of said at least one state variable. The cost function may further comprise terms penalizing a norm of a value or a value of a time derivative of at least one state variable of the one or more state variables. In other words, the cost function may comprise terms penalizing a norm of a value of at least one state variable of the one or more state variables. Alternatively, or additionally, the cost function may comprise terms penalizing a norm of a value of a time derivative of at least one state variable of the one or more state variables.

In examples, the cost function may be of a type $J = {\sum }_{k = 1}^{N} \left(\begin{matrix}{\left‖δ-{δ}_{ref}\right‖}_{{W}_{1}}^{2} + {\left‖{F}_{x}-{F}_{xref}\right‖}_{{W}_{2}}^{2} + {\left‖\dot{δ}-{\dot{δ}}_{ref}\right‖}_{{W}_{3}}^{2} + {\left‖{\dot{F}}_{x}-{\dot{F}}_{x , ref}\right‖}_{{W}_{4}}^{2} + \\ {\left‖\dot{δ}\right‖}_{{W}_{5}}^{2} + {\left‖{\dot{F}}_{x}\right‖}_{{W}_{6}}^{2}\end{matrix}\right)$ wherein *δ* denotes an actual steering angle of the vehicle, *δ_{ref}* denotes a reference steering angle, *Fₓ = (F_{xf}, Fₓᵣ)* denotes a longitudinal force vector for the front and rear wheels, *F_{xf},* and *Fₓᵣ,* respectively.

Furthermore, *F_{xref} =* (*F_{xf,ref}, F_{xr,ref}*) denotes a reference longitudinal force vector for the front and rear wheels, *F_{xf,ref},* and *F_{xr,ref},* respectively. *X* denotes a time derivative of a vector *X,* while ${\left‖X\right‖}_{w}^{2}$, denotes a weighted norm of a vector X defined as (*X, wX*)*.* In this notation wXis a scalar product of said vector *X* by a scalar *w,* and (*X, Z*) being a dot product between a vector *Y* and a vector *Z.* Furthermore, *W =* (*W*₁*, W*₂*, W*₃*, W*₄*, W*₅*, W*₆) denotes a weight vector. Here J denotes the cost function to be minimized. *N* is the number of samples on the time horizon and *k* is an index.

Such a cost function is a least-squares cost function. There exist well-known, and computationally efficient methods for solving such an optimization problem (i.e., minimizing J) where the cost function is a least-square cost function. This improves the computational cost of the method. Furthermore, the MPC framework exploits this assumption that the rates of steering angle and the longitudinal force, i.e., δ̇, and Ḟₓ, respectively, remain constant during the time horizon. This allows tracking the real driver inputs as accurately as possible and thus, the vehicle reaction to those driver inputs, without increasing the model complexity.

In examples, the predicting of a behavior of the one or more state variables comprises predicting, over said time horizon: a sideslip angle of the vehicle, a slip angle of at least one tire of the vehicle, and a sliding slip angle of said at least one tire. The detecting of the handling limit condition may comprise detecting (over said time horizon) a saturation of said at least one tire based on the predicted slip angle of said at least one tire with respect to the predicted, and detecting if the predicted sideslip angle of the vehicle exceeds a sideslip threshold. In other words, the method compares a predicted slip angle of said at least one tire with a respective predicted sliding slip angle of said at least one tire in order to determine if said at least one tire is saturated. The method further compares the predicted sideslip angle of the vehicle with a sideslip threshold.

In examples, sending a feedback signal based on the detected handling limit condition may comprise sending a first feedback signal and a second feedback signal.

In such examples, the method sends a first feedback signal when the method has detected a first degree of the handling limit condition. In the first degree of handling limit condition the predicted slip angle of said at least one tire is saturated, and the predicted sideslip angle of the vehicle is below said sideslip threshold. Said first degree indicates situations in which a tire (rear or front) is saturated and arrives at its maximum grip. However, the vehicle sliding behavior is minimal so that the driver is able to maintain this sliding behaviour within minimal inputs and even recover a stable condition. This signifies a first degree of the detected handling limit condition in which the driver is still in control of the vehicle.

Further in such examples, the method sends a second feedback signal when the method has detected a second degree of the handling limit condition. In the second degree of handling limit condition the predicted slip angle of said at least one tire is saturated, and the predicted sideslip angle the vehicle is above said sideslip threshold. By being above said sideslip threshold it is meant that the absolute value of the predicted sideslip angle is larger than the absolute value of the said sideslip threshold. Said second degree indicates situations in which a tire (rear or front) is saturated and arrives at its maximum grip. Furthermore, the vehicle is about to deviate significantly from the steering command of the driver, which is the direction in which the vehicle tires are pointing. This signifies a second degree of the detected handling limit condition in which the driver is about to lose control of the vehicle. Such situations need to be corrected immediately in order to avoid highly complex steering and acceleration techniques which require advanced driving skills.

By sending the first and the second signal modulated based on the degree of the detected handling limit condition the method provides the driver with a clear indication of the degree of severity of the handling limit condition to attract the driver's attention to the importance of the actions to be done. The degree of severity indicates how controllable the detected handling limit condition is. This improves safety in controlling the vehicle.

In examples, detecting a saturation of said at least one tire based on the predicted slip angle of said at least one tire may comprise determining if the predicted value of a slip angle of said at least one tire is above a predicted value of a sliding slip angle of said at least one tire for a time duration of the time horizon. This means that the method compares the absolute value of the predicted slip angle of said at least one tire with the absolute value of the predicted sliding slip angle of said at least one tire for a time duration of the time horizon. In other words, the method compares the (absolute value of the) predicted slip angle of said at least one tire with its limit value which is sliding slip angle to detect the saturation of the tire. The saturation means that the predicted slip angle is equal or larger than the predicted sliding slip angle and the tire cannot produce further lateral force.

In examples, the sending a feedback signal to a driver may comprise one or more of emitting an audio signal, displaying a visual representation of the determined handling limit condition, and sending haptic vibration signals, on a steering unit, a driver's seat and/or a pedal of the vehicle. In other words, the feedback signal may be of a type among an audio type, a visual type or a haptic type. The audio signal may be an audio message to the driver describing the handling limit condition. The audio signal may be a warning sound, like a heartbeat pulse sound or an alarm beep sound. Specifically, in examples discussed above where the sending of the feedback signal comprises a first feedback signal and a second feedback signal, the first feedback signal and the second feedback signal may be an audio signal. In such cases, the first feedback signal may be a heartbeat pulse sound, and the second feedback signal may be an alarm beep sound.

The visual representation of the determined handling limit condition may be a combination of text and image to be displayed on a screen in the vehicle so that the driver can see the screen.

In examples discussed above where the sending of the feedback signal comprises a first feedback signal and a second feedback signal, the first feedback signal may be of a first type among the types discussed above, while the second may be of a second type among the typed discussed above. Said first type and the second type may be the same.

Further in examples discussed above where the sending of the feedback signal comprises a first feedback signal and a second feedback signal, the second signal has a frequency and/or an amplitude higher than of the first signal. In such examples, the first and the second feedback signals may be of a same type. Preferably said frequency and/or said amplitude of the second feedback signal are two times as high as of the first signal.

This provides a clear distinction between the first and the second feedback signal and helps alert the driver more efficiently with the detection of a second degree of the handling limit condition. This helps guide the driver in controlling the handling limit condition more efficiently.

The present disclosure further relates to a computer program comprising instructions for performing the method.

The present disclosure further relates to a computer readable storage medium having recorded thereon the computer program.

The present disclosure further relates to a system, for example, a drive assistance system like ADAS, comprising a processor coupled to a memory and preferably a graphical user interface, the memory having recorded thereon the computer program.

The present disclosure further relates to a vehicle comprising the driver assistance system.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 shows a flowchart of an example of the method;
- FIG. 2 shows a diagram of the bicycle model with three DOFs;
- FIG. 3 shows a schematic example of an HSC concept according to the method;
- FIGs. 4-5 show an example of oversteer detection and sending haptic feedback signals to the driver;
- FIG. 6 shows a flowchart of another example of the method;
- FIG. 7 is a schematic representation in top view of a vehicle equipped with a driving assistance system according to the present disclosure;
   FIG. 8 shows a driving simulator;
   FIG. 9 shows a user study protocol;
   FIG. 10 shows a subjective assessment of the haptic support concept;
   FIG. 11 shows best drift based on distance and corresponding percentage of successful drifts;
   FIG. 12 shows a cross-plot of distance versus standard deviation of velocity for the best drift of each participant and phase; and
   FIG. 13 shows a cross-plot of steer use versus gas use for the average drift of each participant and phase.

### DETAILED DESCRIPTION OF EMBODIMENTS

Examples of the method for controlling a vehicle in a handling limit condition by a driver assistance system of the vehicle are now discussed, further in reference to figures.

A driver-assistance systems or an advanced driver-assistance systems (ADAS) are technologies that assist drivers with the safe operation of a vehicle (see https://en.wikipedia.org/wiki/Advanced_driver-assistance_system). Through a human-machine interface, ADAS increase vehicle and road safety. ADAS use automated technology, such as sensors and cameras, to detect nearby obstacles or driver errors, and respond accordingly. ADAS can enable various levels of autonomous driving.

By the handling limit condition, it is meant a point or a situation at which the vehicle tires, for example a front tire or a rear tire, lose grip with the road surface and can no longer generate enough lateral force to maintain the intended path through normal steering inputs. In other words, the handling limit condition defines the threshold between grip and slip, where the vehicle tires reach the maximum lateral force possible. In such situations, the steering (i.e., turning) of the vehicle does not match the driver's command. For example, the handling limit condition may comprise oversteering or understeering. In understeer, the vehicle steers less than what the driver commands while oversteer is the turning of the car more than what the driver commands. In case of oversteer, accidents typically occur when inexperienced drivers perceive that they have turned the wheel too far and too quickly, and they overcompensate by quickly turning the wheel in the opposite direction, causing spinning of the vehicle and a total loss of control. The sustained control of such extreme oversteer condition is called drifting

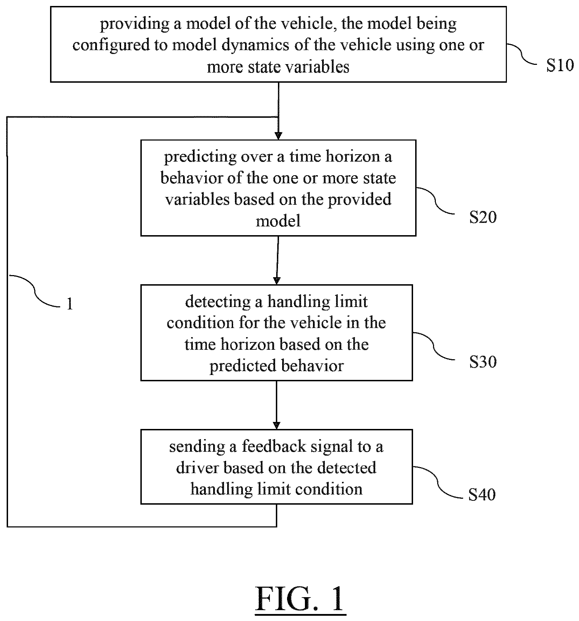

In reference to FIG. 1, the method comprises, at step S10, providing a model of the vehicle which is configured to model dynamics of the vehicle using one or more state variables. In other words, the model describes the dynamics (i.e., velocity, acceleration, rotation and the like) of the vehicle based on the one or more state variables. The one or more state variables may be a position, a velocity, or an acceleration of the vehicle. The number of the one or more state variables may depend on the degrees-of-freedom (DOF) of the model. The model may comprise one or more algebraic equations, ordinary differential equations (ODEs), and/or partial differential equations (PDEs). The model may be a time-dependent model; therefore, the one or more state variables comprise at least a time variable.

In examples, the model may be a bicycle model with three DOFs. In mathematical notations, the bicycle model describes the lateral and longitudinal dynamics, according to and equations (1) to (3) as below ${\dot{u}}_{x} = \frac{1}{m} \left({F}_{xf} cos δ-{F}_{yf} sin δ+{F}_{xr}\right) + {ru}_{y}$ (1) ${\dot{u}}_{y} = \frac{1}{m} \left({F}_{yf} cos δ+{F}_{xf} sin δ+{F}_{yr}\right) - r {u}_{x}$ (2) $\dot{r} = \frac{1}{{I}_{zz}} \left({l}_{f}{F}_{yf} cos δ+{l}_{f}{F}_{xf} sin δ-{l}_{r}{F}_{yr}\right) + {ru}_{y}$ (3) where u̇ₓ is the longitudinal velocity, u̇_{y} is the lateral velocity, and *ṙ* is the yaw rate change.

In this model, the states are the longitudinal position *uₓ,* the lateral position *u_{y},* the yaw rate r. The inputs are the longitudinal forces for the front and rear wheels, denoted as *F_{xf}* and *Fₓᵣ,* respectively. The steering angle (i.e., the driver steering) of the front tire is denoted as δ. *F_{yf}* and *F_{yr}* are the lateral forces of the front and rear tire, respectively, which are computed through a tire model as discussed below. Regarding the vehicle parameters, *l_{f}* and *lᵣ* are the distances from the vehicle's center of mass to its front and rear axles, *m* is the vehicle mass, *I_{ZZ}* moment of inertia along the yaw axis. As can be seen, the model uses lumping on the front and rear tires (so there is no distinction between the two front tires or the two rear tires).

Longitudinal load transfer is relevant in heavy acceleration or braking events and is modelled through static moment balance. Therefore, the computation of the vertical loads of each axle, i.e., *F_{zf}* and *F_{zr}* is based on the total longitudinal force *Fₓ* and shown in equations (4) and (5) below ${F}_{zf} = \frac{1}{L} \left({mgl}_{r}-{h}_{cm}{F}_{x}\right)$ (4) ${F}_{zr} = \frac{1}{L} \left({mgl}_{f}+{h}_{cm}{F}_{x}\right)$ (5) where *h_{cm}* is the height of the center of mass from the ground and *L* is the total wheelbase, i.e., *L = l_{f} + lᵣ.* As known, total longitudinal force *Fₓ* is related to the vertical vehicle load (F_{z}) and the tire slip ratio. The tire slip ratio is the ratio of the rotational speed of the tire over the forward vehicle speed.

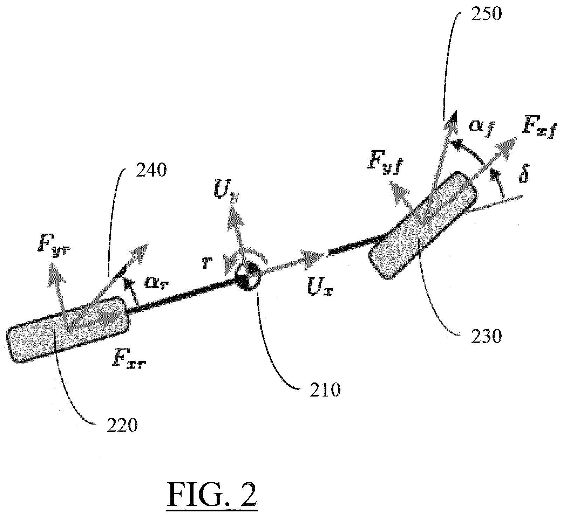

An example of the bicycle model is presented in FIG. 2. The center of mass of the vehicle is shown by 210. Furthermore, 220 and 230 show lumped rear tires and front tires, respectively. The steering angle *δ* ang the longitudinal force *Fₓ* are considered as the inputs of the 3DOFs bicycle model. In this model, *uₓ, n_{y},* and r are the three state variables (or DOFs). These inputs represent the inputs by the driver (i.e., steering and acceleration, e.g., via a gas pedal).

The model may comprise a tire model, for example a non-linear Fiala brush tire model. This tire model accurately describes tires behavior up to the limits of handling while having a light computational complexity. In Fiala brush tire model, the lateral force of the tires is estimated using the road friction coefficient, and the cornering stiffness. In mathematical notations, the front and rear tire slip are expressed as equations (6) and (7), respectively ${α}_{f} = arctan \left(\frac{{u}_{y} + {l}_{f} r}{{u}_{x}}\right) - δ$ (6) ${α}_{r} = arctan \left(\frac{{u}_{y} - {l}_{r} r}{{u}_{x}}\right)$ (7)

The lateral force *F_{y}* is computed using the following equations: ${F}_{y} = \left\{\begin{matrix}- {C}_{α} tan α + \frac{{C}_{α}^{2}}{3 {F}_{y}^{max}} \left|tan α\right| tan α - \frac{{C}_{α}^{3}}{27 {\left({F}_{y}^{max}\right)}^{2}} {tan}^{3} α & \left|α\right| < {α}^{sl} \left(8\right) \\ - {F}_{y}^{max} sgn \left(α\right) & otherwise \left(9\right)\end{matrix}\right.$ where the sliding slip angle and ${F}_{y}^{max}$ are computed as ${α}^{sl} = arctan \left(\frac{3 {μF}_{z}}{{C}_{α}}\right)$ (10) ${F}_{y}^{max} = \sqrt{{\left({μF}_{z}\right)}^{2} - {F}_{x}^{2}}$ (11) where µ denotes the road friction coefficient, and *C_{α}* is the cornering stiffness. Here *Fₓ =* (*F_{xf}, Fₓᵣ*) and *Fₓ =* (*F_{zf}, F_{zr}*)*.* Furthermore, *F_{yf}* and *F_{yr}* are computed using front slip angle *α_{f}* and rear slip angle *αᵣ* as *α* in (8) or (9), respectively. As known, the slip angle of a tire is the angle between the direction that the steering angle and the direction in which the tire contact patch is traveling. In the 3DOFs bicycle model, there is a slip angle of the (lumped) front tires (herein denoted as *α_{f}*)*,* and a slip angle of the (lumped) rear tires (herein denoted as *αᵣ*)*.* Slip angles are shown in FIG. 2 between contact patch travelling direction 240 for the rear tire, and contact patch travelling direction 250 for the front tire.

The computing of the lateral force in (8) and (9) depends further on the limit slip angle also called the sliding slip angle *α^{sl} .* The sliding slip angle of a tire is the limit slip angle of said tire. In other words, this is the slip angle in which a tire generates the maximum lateral force or grip that the tire can produce. The sliding slip angle is the angle characterizing the transition from unsaturated to saturated operating region of the tire. The vehicle load at the front and rear influences the limit slip angle, so it is most common that front and rear limits are different. Hereinafter, the sliding slip angle of the (lumped) rear tires in the bicycle model is as *α^{sl,r}* while the slide angle of the (lumped) front tires is denoted as *α^{sl,f}.* The lateral force *F_{yf}* and *F_{yf}* are then computed using the respective sliding slip angle as the transition between equation (8) and (9).

Back to FIG. 1, the method comprises, at step S20, predicting over a time horizon a behavior of the one or more state variables based on the provided model. In other words, the method exploits the method to determine (i.e., predict) a value for said one or more state variables over said time horizon. By "behavior" of the one or more state variables it is meant how their value varies during said time horizon. By predicting said behavior over said time horizon it is meant to determine an estimated value for said one or more state variables over said time horizon or at least on a plurality of samples thereof. The behavior prediction may comprise solving said algebraic equations, ODEs, and/or PDEs discussed above. The solving of said equations may employ a numerical solver as known in the field of mathematics.

In particular, the method may predict, over said time horizon, a slip angle of at least one tire of the vehicle, and a sliding slip angle of said at least one tire. Furthermore, the method may predict, over said time horizon, a sideslip angle of the vehicle. As known, sliding slip angle, also called limit slip angle, is the angle between the direction in which the vehicle tires are pointing and the direction in which the vehicle is actually traveling. This can be calculated based on the "arctangent" of the lateral vehicle velocity over the longitudinal vehicle velocity, i.e., in the 3DOF bicycle model $β = arctan \left(\frac{{u}_{y}}{{u}_{x}}\right)$ where the sliding slip angle of the vehicle is denoted as β.

Said at least one tire may be one or more tires (e.g., all tires) among the front tires or the rear tires. In 3DOFs bicycle model, said at least one tire may be the lumped rear tires or the lumped front tires.

The time horizon may be a time interval so as to provide the driver with sufficient time to control the vehicle in handling limit conditions, for example two seconds, one second, or 0.5 seconds.

The prediction of the behavior of the one or more state variables may comprise minimizing a cost function using Model Predictive Control (MPC). As known, MPC is a control technique that optimizes the calculated control action by minimizing a cost function. This optimization is done at each time step and over a finite time horizon. The MPC framework can predict the future states of the vehicle based on the current states and a certain optimal computed input. The optimal input is found by the MPC controller using a cost function. The proposed MPC configuration does not use any external reference. In other words, the MPC does not rely on, for example, knowledge of the future path.

The MPC cost function may be of a least-square type as follows $J = {\sum }_{k = 1}^{N} \left(\begin{matrix}{\left‖δ-{δ}_{ref}\right‖}_{{W}_{1}}^{2} + {\left‖{F}_{x}-{F}_{xref}\right‖}_{{W}_{2}}^{2} + {\left‖\dot{δ}-{\dot{δ}}_{ref}\right‖}_{{W}_{3}}^{2} + {\left‖{\dot{F}}_{x}-{\dot{F}}_{x , ref}\right‖}_{{W}_{4}}^{2} + \\ {\left‖\dot{δ}\right‖}_{{W}_{5}}^{2} + {\left‖{\dot{F}}_{x}\right‖}_{{W}_{6}}^{2}\end{matrix}\right)$ (12) wherein *δ* denotes an actual steering angle of the vehicle, *δ_{ref}* denotes a reference steering angle, *Fₓ =* (*F_{xf}, Fₓᵣ*) denotes a longitudinal force vector for the front and rear wheels, *F_{xf},* and *Fₓᵣ,* respectively. Furthermore, *F_{xref} =* (*F_{xf,ref} , F_{xr,ref}*) denotes a reference longitudinal force vector for the front and rear wheels, *F_{xf,ref},* and *F_{xr,ref},* respectively. *X* denotes a time derivative of a vector *X,* while ${\left‖X\right‖}_{w}^{2}$ denotes a weighted norm of a vector X defined as (*X, wX*)*.* In this notation *wX* is a scalar product of said vector *X* by a scalar w, and (*X, Z*) being a dot product between a vector *Y* and a vector *Z.*

Here J denotes the cost function to be minimized. *N* is the number of plurality samples on the time horizon and *k* is an index denoting a sample of said plurality. In other words, the MPC framework samples the cost function on a specified sampling frequency over the time horizon, sums the obtained terms to obtain a final cost function, and then minimizes the final cost function over said samples.

Furthermore, *W =* (*W*₁*, W*₂*, W*₃*, W*₄*, W*₅*, W*₆) denotes a weight vector. For example, the weight can be set as (*W*₁*, W*₂*, W*₃*, W*₄*, W*₅*, W*₆) *=* [0.01, 0.01, 500, 700, 1, 10]. Such a weight provides an adequate scaling among the terms of the cost function.

The reference value in the cost function may be set according to the driver inputs, i.e., *δ* and *Fₓ* and/or the road characteristics. For example, the reference values of the driver inputs and their rate of change (i.e., *δ_{ref}, F_{xref},* δ̇_{ref}, and *Ḟ_{x,ref},* respectively) may be set to a respective value at the beginning of the time horizon, Alternatively, one or more (e.g., all) reference values may be set to zero.

The MPC inputs (denoted by u) have been chosen to be the time derivatives of the inputs of the bicycle model as discussed above, i.e., u = [δ̇, Ḟₓ]. These rates of change of the steering angle and the longitudinal force are assumed to be constant during the time horizon in the MPC framework. In other words, the MPC framework considers that the driver inputs change over the prediction horizon at a constant rate. This allows tracking the real driver inputs as accurately as possible and thus, the vehicle reaction to those driver inputs. In other words, by considering these constant rates, the MPC allows the method to extrapolate the driver changing inputs without increasing the complexity of the MPC framework.

The MPC predicts the following state variables over the time horizon $x = \left[{u}_{x} {u}_{y} r δ {F}_{x}\right]$ (13) by solving the minimization problem discussed above. In solving the minimization problem, the method also obtains a prediction for the sideslip angle of the vehicle, as well as the slip angle and the sliding slip angle according to equations (1)-(11).

The MPC framework may be implemented with the ForcesPro software in Simulink. The solver used with the MPC was a "Sequential Quadratic Programming" with a "gauss-newton" hessian approximation and maximum of 50 iterations per solution.

In implementing MPC, the prediction horizon (denoted by *Nₚ*) is set to 0.5 seconds and the MPC sampling time (*T_{sc}*) to 100 Hz thereby 50 time samples are used.

Back to FIG. 1, the method further comprises, at step S30, detecting a handling limit condition for the vehicle in the time horizon based on the predicted behavior. In other words, the method analyses the obtained prediction for the state variable(s) over the time horizon in order to find one or more indicators related to a handling limit condition. The detecting of a handling limit condition may comprise detecting that the handling limit condition is realized, as well as determining a degree of the detected handling limit condition.

In examples, and as a first indicator, the method detects a handling limit condition by detecting, over the time horizon, a saturation of said at least one tire based on the predicted slip angle of said at least one tire with respect to the predicted sliding slip angle of said at least one tire. In other words, the method assesses if at least one tire is saturated by comparing the predicted slip angle of said tire with respect to the predicted sliding slip angle of said tire (which is the respective saturation value for the slip angle of said tire). The method detects that said tire is saturated if the predicted slip angle of is above the predicted value of a sliding slip angle of said tire for at least a time duration of the time horizon.

In the MPC framework, the first indicator indicates if the predicted slip angle of said tire is above the predicted value of the sliding slip angle for at least one sample among the plurality of samples (denoted by index k above). This may trigger sending the feedback signal as discussed below.

Additionally, and as a second indicator, the method detects, over the time horizon, if the predicted sideslip angle of the vehicle exceeds a sideslip threshold. The second indicator serves to determine a degree of severity of the detected handling limit condition. The degree of severity indicates how controllable the detected handling limit condition is. By "exceeding" it is meant that the absolute value of the predicted sideslip angle becomes larger than the absolute value for the sideslip threshold. The sideslip threshold may be preset based on experiments on drivers at different levels of expertise to verify at what moment a driver is most likely not able to keep control of the vehicle. The sideslip threshold may be set to 0.5 rad. This value is shown to be particularly effective for detecting oversteering limit conditions.

The method may perform the detection step for one or more tires (or lumped tires, like 3DOFs bicycle model), for example all tires, among the front tires or the rear tires of the vehicle. The method may then determine that a handling limit condition is realized when the first indicator discussed above indicates said handling limit condition for at least one tire (or a lumped tire). The method may then determine a degree of severity for said detected handling limit condition based on the second indicator as discussed above by determining if the predicted sideslip angle of the vehicle exceeds a sideslip threshold.

In examples, the handling limit condition may be an oversteering condition or an understeering condition. When the handling limit condition is an oversteering condition, said at least one tire a rear tire of the vehicle. On the other hand, when the handling limit condition is an understeering condition, said at least one tire is a front tire of the vehicle.

In other words, the method distinguishes between understeer and oversteer based on tire slip angle.

Regarding the oversteering condition, the method detects a first degree of oversteering when for at least one rear tire, the predicted slip angle of the tire is saturated, and the predicted sideslip angle of the vehicle is below said sideslip threshold. The method further detects a second degree of the handling limit condition in which the predicted slip angle of said at least one rear tire is saturated, and the predicted sideslip angle the vehicle is above said sideslip threshold. The (predicted) sideslip angle for an oversteering condition may be defined to be presented by a negative value. The sideslip threshold for detecting an oversteering condition may be set to 0.5 radians.

Regarding the understeering condition, the method detects a first degree of oversteering when for at least one front tire, the predicted slip angle of the tire is saturated, and the predicted sideslip angle of the vehicle is below said sideslip threshold. The method further detects a second degree of the handling limit condition in which the predicted slip angle of said at least one front tire is saturated, and the predicted sideslip angle the vehicle is above said sideslip threshold. The (predicted) sideslip angle for an understeering condition may be defined to be presented by a positive value.

The method may then send a first feedback signal, and the second feedback signal as discussed below upon detecting first/second degree of the detected under/oversteer condition. This forms a modulated feedback signal according to a degree severity of the handling limit condition.

Back to FIG. 1, the method further comprises, at step S40, sending a feedback signal to a driver based on the detected handling limit condition. The feedback signal may be an alert signal regarding a handling limit condition and/or a guide signal to support the driver in controlling the vehicle in said handling limit condition. By "based on a degree of the detected handling limit condition" means being based on a degree of severity of said handling limit condition. The degree of severity may be an indicator of the risk of losing control of the vehicle by the driver. By "the feedback signal being modulated based on a degree of the detected handling limit condition" means that the signal varies on frequency, strength (i.e., amplitude) or any other characteristics based on said degree of severity.

The feedback signal to a driver may comprise one or more of emitting an audio signal, displaying a visual representation of the determined handling limit condition, and sending haptic vibration signals, on a steering unit, a driver's seat and/or a pedal of the vehicle. In other words, the feedback signal may be of a type among an audio type, a visual type or a haptic type. The audio signal may be an audio message to the driver describing the handling limit condition. Alternatively, the audio signal may be a warning tone (e.g., a heartbeat pulse sound or an alarm beep sound). The visual representation of the determined handling limit condition may be a combination of text and image to be displayed on a screen in the vehicle so that the driver can see the screen.

As discussed above, sending the feedback signal may be modulated according to the detected degree handling limit condition. In other words, the method sends a first feedback signal for a first degree and sends the second feedback signal for the second degree. Further to this distinction between a first and a second signal to indicate the severity of the detected situation, the method may emit the first feedback signal and/or the second feedback proportional to the time duration in which the predicted value of the slip angle of the tire is above the respective sliding slip angle of the tire. In this way, the method increases the strength (or amplitude) of the feedback signal based on how important the predicted saturation is. This constitutes improved feedback to the driver to alert the driver of the handling limit condition.

For example, in the MPC framework, said signals may be proportional to the amount of prediction points that predict saturation tire saturation. In the examples of MPC with 50 points, this proportion may be between 0 (no saturation predicted) and 50 (all sample points are predicted to be saturated). The proportion may be applied to a respective waveform of the feedback signal, i.e., a first waveform for the first feedback signal, and the second waveform for the second feedback signal.

Each of the first feedback signal and the second feedback signal may be according to a different waveform, for example a triangle waveform, a sinusoidal waveform, or a heart-bit like pulse. The method may then send the first/second feedback signal according to a respective waveform by setting a frequency and/or an amplitude (for example as discussed above regarding the proportion to the saturation duration). The second signal may have a frequency and/or an amplitude higher than of the first signal, preferably said frequency and/or said amplitude being two times as high as of the first signal. In this way, the method is able to guide the driver about the handling limit condition of the second degree in which control of the vehicle is about the be lost.

Back to FIG. 1, the method comprises one or more iterations of the steps S10-S40 discussed above. These iterations are shown by arrow 1 in FIG. 1. The method may execute said steps S10-S40 one or more times, for example continuously while the vehicle is in driving mode. The method may repeat said steps at a specified frequency, for example every second, or every minute. The frequency of repetition may depend on a velocity of the vehicle and/or a rotational speed of an engine of the vehicle. Alternatively or additionally, the frequency of repetition may depend on the weather condition and/or road condition.

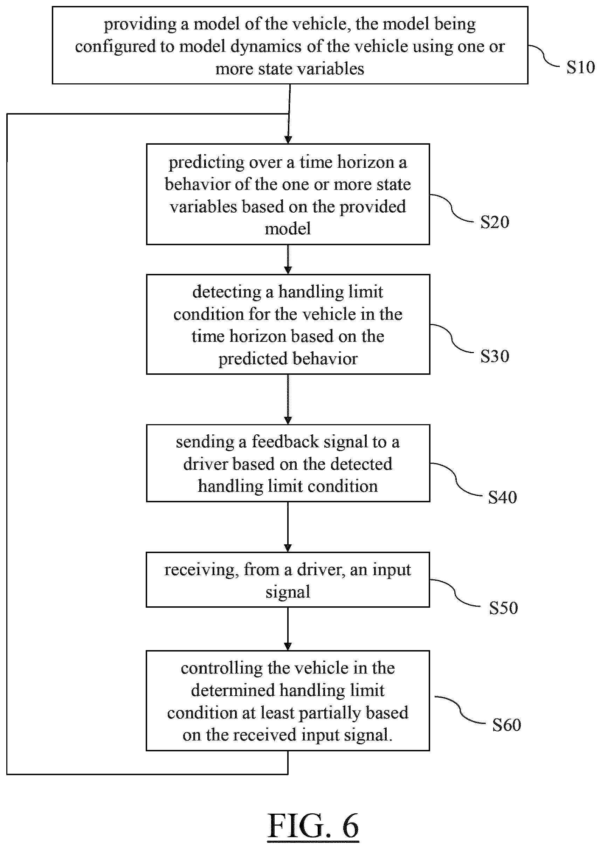

In reference to FIG. 6, further examples of the method are now discussed.

In such examples, the method (i.e., each iteration thereof) may further comprise, at step S50, receiving, from a driver, an input signal. The method may then, at step S60, control the vehicle in the determined handling limit condition at least partially based on the received input signal.

In examples, controlling the vehicle at least partially based on the received input signal may comprise computing an assistive control signal, and applying the computed assistive control signal to the vehicle. The input signal may comprise a driver torque applied by the driver to a steering unit of the vehicle, a driver acceleration signal and/or a braking signal applied to an operation member of the vehicle. The operation member may be a respective pedal (e.g., a brake pedal, or a gas pedal) or any other element adequate to receive such a signal from the driver.

The computed assistive control signal may comprise an assistive torque to be applied to the steering unit of the vehicle in addition to the driver torque. The steering unit may be the steering wheel or any other element adequate to receive such a signal from the driver. Alternatively, or additionally, the computed assistive control signal may comprise an assistive acceleration signal and/or the assistive braking signal to be applied to the vehicle in addition to the driver acceleration signal and/or the driver braking signal. The assistive acceleration signal and/or the assistive braking signal may be directly applied to the vehicle or indirectly applied to the vehicle via said operation member.

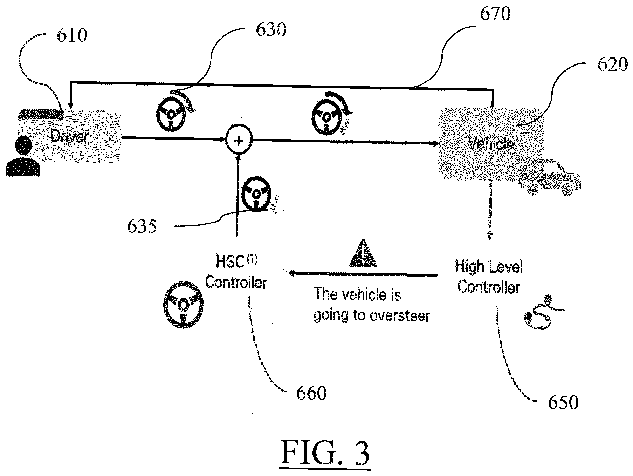

In reference to FIG. 3, an example of such a control of the vehicle based on the received input signal from the driver is discussed. In this example, driver 610 is in control of vehicle 610 by inputting driver torque 630 to the steering unit. When the high-level controller 650 (which functions according to an example the controlling method of the present disclosure) detects an imminent risk of oversteering the HSC controller 660 computes an assistive control signal, for example, assistive torque 635. Vehicle 620 is then subject to assistive torque 635 which is applied, further to driver torque 630, to the steering unit of the vehicle.

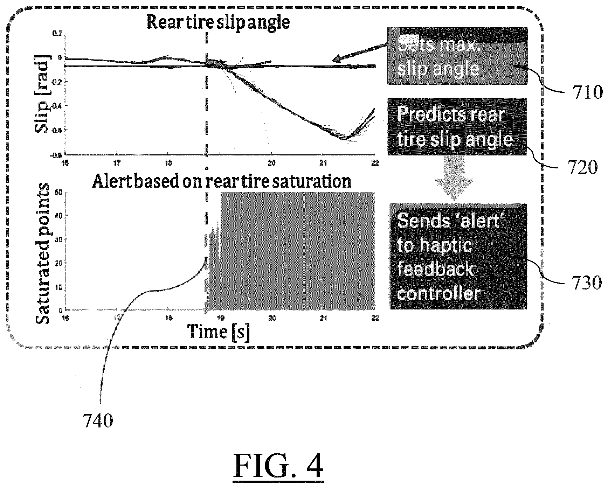

FIG. 4 shows an example implementation of the method in which the proposed MPC framework predicts the vehicle and tire states 0.5 seconds ahead based on the driver steering and gas inputs to detect oversteer by the rear tires' saturation. The implementation sets, at 710, the maximum slip angle upon determining the sideslip angle of the lumped rear tires. The implementation, at 720, continuously predicts the rear tire slip angle and then, at 730, sends an alert signal. Said alert signal is sent to haptic feedback controller. As can be seen the implementation detects the saturation at time 740 and the alert based on the saturation is proportional to the number of points predicted to be saturated (between 0 and 50time samples as discussed above).

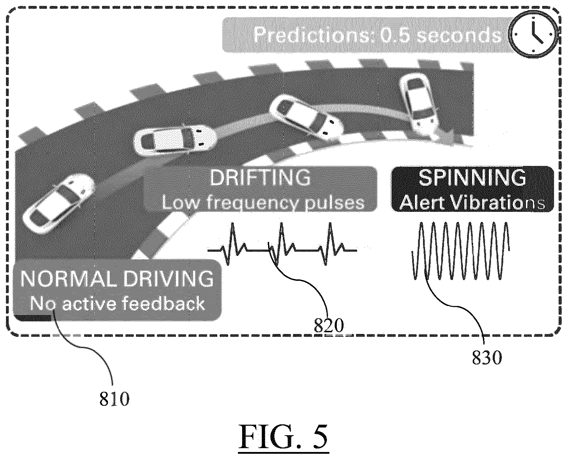

FIG. 5 shows an example of the alert signal (e.g., haptic alert signals) sent to the driver when an oversteer is detected. In the case of normal driving 810 no feedback signal is sent. On the other hand, when the overseer happens but the driver is still in control of the vehicle (e.g., in drifting) as in 820, low frequency heartbeat-like pulse signals are sent to the driver as the first feedback signal discussed above. In such cases, the vehicle slides on the rear tires but maintains a good angle for drifting. Furthermore, when the spinning happens and the driver is about to lose control of the vehicle as in 830, alert vibration is sent.

The examples discussed above are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled with a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database). In the context of the present disclosure, the system may be an advanced driver assistance system (herein after, ADAS).

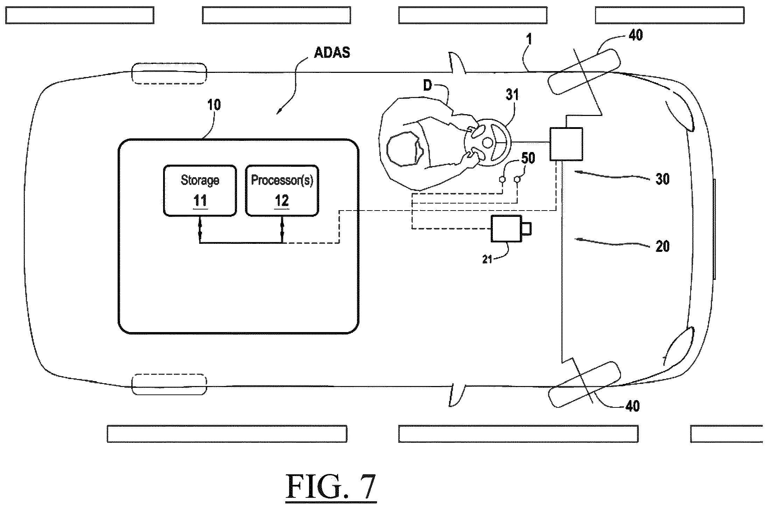

An ADAS according to the present disclosure will now be presented. The physical structure of the ADAS is illustrated by FIG. 7. On these figures, the ADAS is presented in operation, mounted on a vehicle 1. The vehicle 1 is a car, which represents a nonlimiting example of a vehicle on which a system according to the present disclosure can be mounted.

The vehicle 1 includes the ADAS. The ADAS comprises a central driving computer 10 ('computer 10'), a set of sensors 20, each sensor being connected to computer 10, a steering unit 30, front wheels 40, actuators 50, and various other components.

Most components of the ADAS system are shared components, which are used to perform multiple tasks. That is, the components of the ADAS system perform the functions of the ADAS system, but may also perform other functions in vehicle 1. The ADAS system includes in particular, as mentioned above, a controlling system according to the present disclosure, which is essentially constituted by the computer 10.

Although computer 10 is represented on FIG. 7 in a single box, it may comprise one or more processors, and can therefore be a distributed calculation system, distributed over a plurality of processors, possibly physically arranged on different locations.

The steering unit 30 comprises in particular a steering wheel 31 for steering front wheels 40. The set of sensors 20 comprises in particular sensors configured to perceive an external environment of car 1. In this purpose, it comprises several cameras. One of these cameras, the front camera 21 is represented on FIG. 7. The values outputted by sensors 20 are transmitted in real time to computer 10.

During driving, in order to steer car 1, the driver D of car 1 applies a driver torque to the steering wheel 31. The functions (the functional units) of the ADAS system are implemented on the computer 10. Computer 10 comprises a non-transitory storage medium 11 and one or more processor(s) 12. The computer 10, in particular in its storage medium 11, stores instructions which when executed by the one or more processor(s) 12 cause the one or more processor(s) 12 to implement the different functional units or functions of the ADAS system. The one or more processors 12 are intended to be representative of the presence of any one or more processors or processing devices, of any of a variety of forms.

A computer program to perform controlling tasks according to the present disclosure, is stored in storage medium 11. This program, and the storage medium 11, are examples respectively of a computer program and a computer-readable recording medium pursuant to the present disclosure.

The storage medium 11 of the computer 10 indeed constitutes a recording medium according to the invention, readable by the one or more processor(s) 12 and on which said program is recorded.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

### Experiments

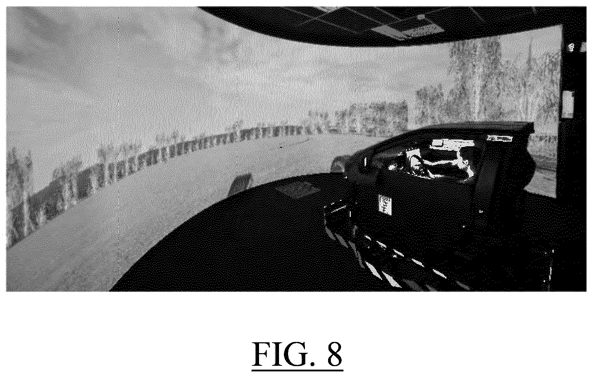

A large-scale user test was conducted to assess the performance of the method. The test was carried out in a driving simulator as shown in FIG. 8.

Twenty-two participants were evenly distributed into the two groups. Both groups were composed of 8 men and 3 women each, and an average age of 25.4 years old. All participants have no or little drifting experience. The "control" group is used as reference and is not exposed to the haptic support system. The "control" group has their driver license on average for 6.2 years, which is similar to the "haptic" group, which has their driver license on average for 6.1 years.

The participants were asked to drift an automatic Rear-Wheel Drive car (i.e., *Fₓᵣ = Fₓ* and *F_{xf}* = 0) in a slippery road scenario (with road surface friction as *µ_{road}* = 0.4), during a 90min session. The vehicle characteristics were chosen to incentivize the car to oversteer more easily, while maintaining a good vehicle controllability for participants during the user test.

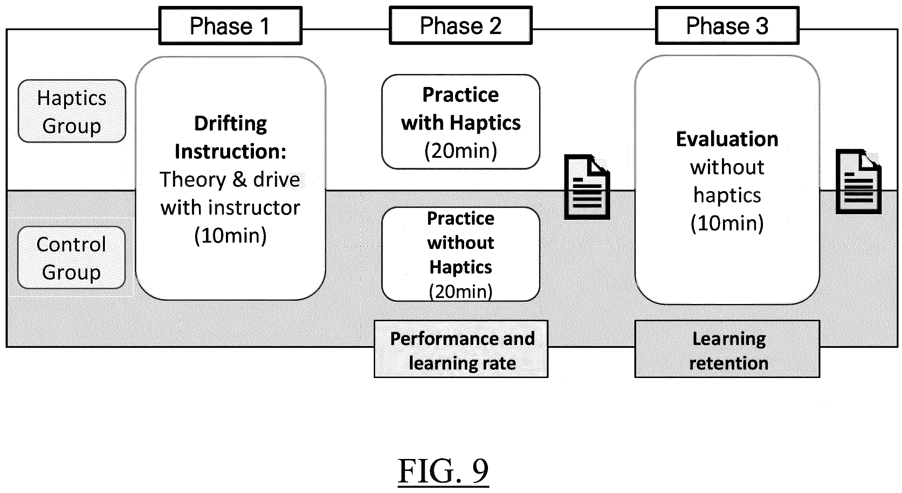

The test was comprised of three phases: instruction, practice, and evaluation, as presented in FIG. 9. Phase 2 is meant to assess performance and learning rate while Phase 3 is meant to assess learning retention. Subjective feedback of performance was gathered both after Phase 2 and Phase 3.

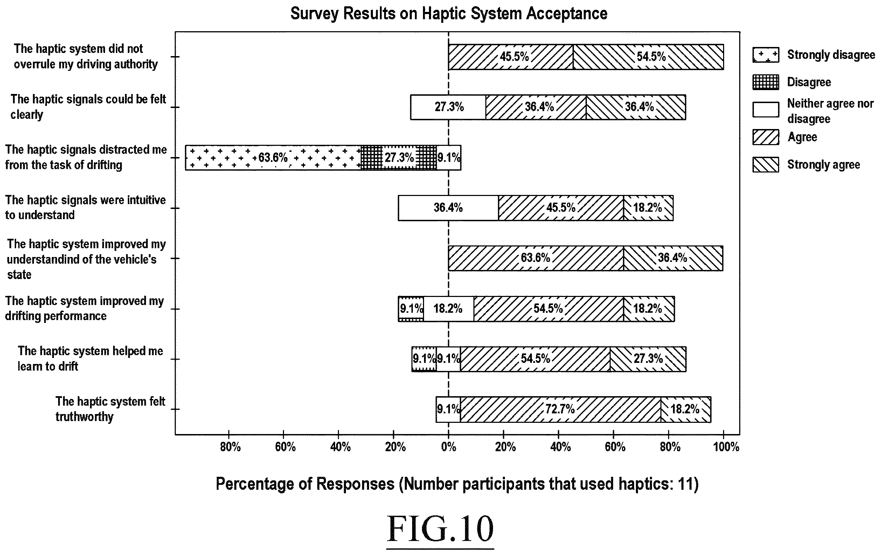

As subjective results, the results of a questionnaire on the acceptance of the HSC system are shown in FIG. 10. The subjective results from questions 1 to 3 showed that the HSC system helped participants understand the vehicle behavior better. The subjective results from questions 4 to 8 showed that participants believed the haptic feedback was both intuitive and non-intrusive

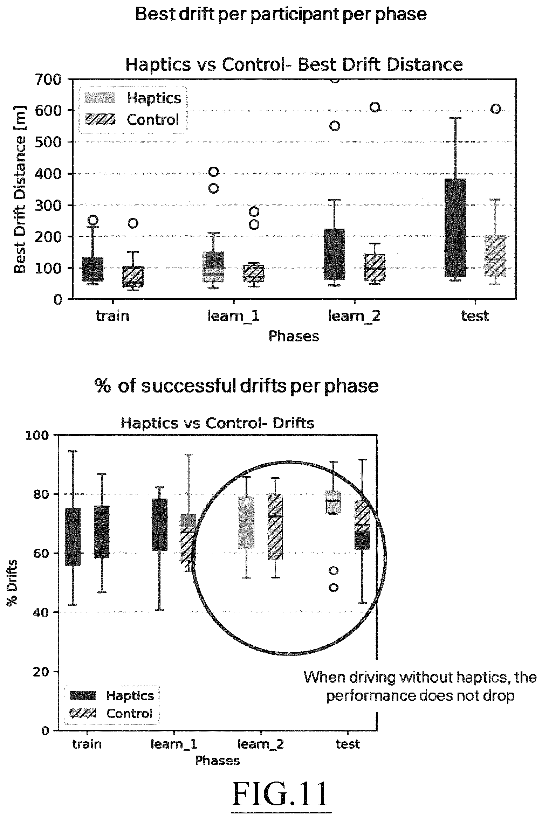

Objective results are now discussed in reference to FIGs. 11-13. The objective data showed that "haptic" participants learned how to maintain longer drifts more effectively than "control" participants: they learnt how to not lose too much speed during the drift and how to be smoother with their inputs. In addition, "haptic" participants did not become over-reliant on the HSC system.

The improvement in the best drift per participant per phase can be seen in FIG. 11 along with the corresponding percentage of successful drifts. From the drift learning stage (phase 1) to the drift performance evaluation (phase 3), there is no drop in performance in the "haptics" group, indicating that these participants were not dependent on the HSC to drift.

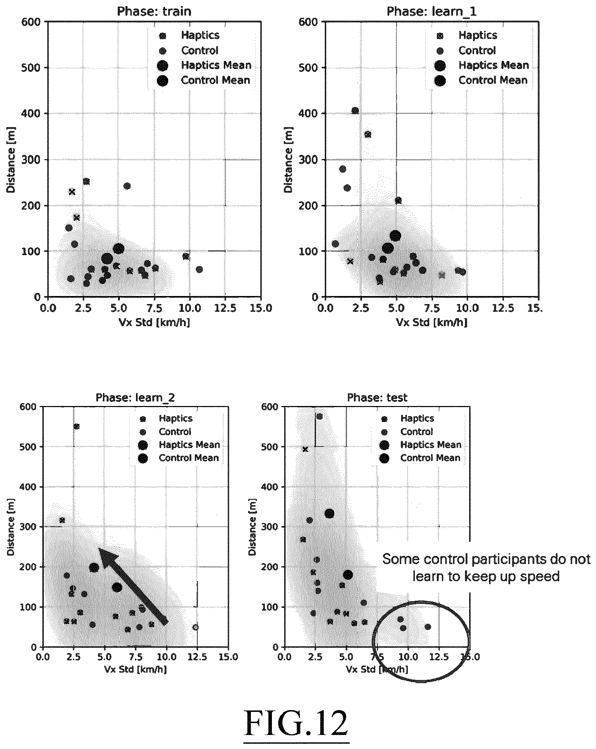

FIG. 12 compares the distance of the bests drift against the standard deviation of the velocity during the drift. This indicates how much the velocity varies during the drift. The lower the number, the "smoother" the drift. This could suggest that the haptic concept helps drivers understand the correct actuation quicker.

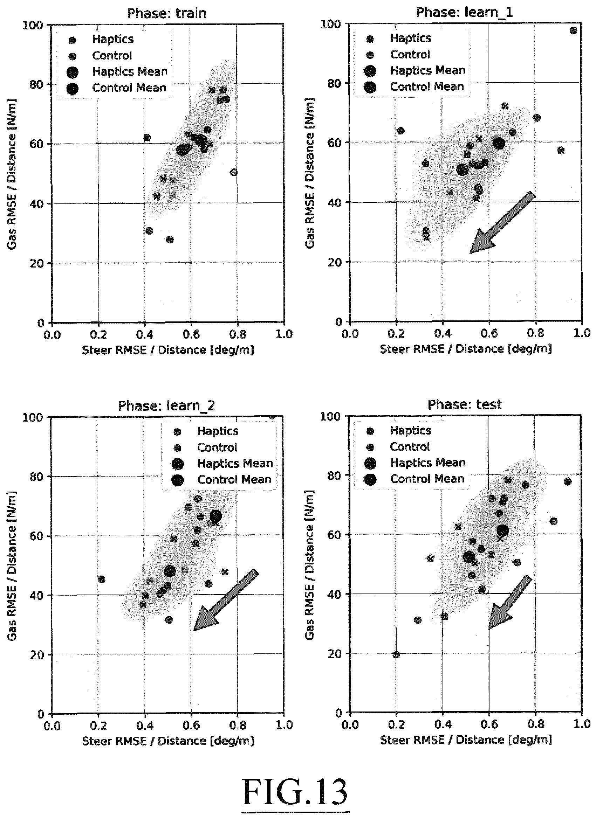

FIG. 13 shows the use of gas and steering on average per participant per phase. It can be seen how on average the haptic participants perform drifts using less gas and less steering, or, in other words, being "smoother". This indicates that receiving positive feedback when drifting properly makes the participant 'guess less' than the control participants.

### References

[1] M. Kyriakidis, C. van de Weijer, B. van Arem, and R. Happee. "The deployment of advanced driver assistance systems in Europe". SSRN Electronic Journal, 2015. doi: 10.2139/ssrn.2559034.
[2] S. Ayyasamy. "A Comprehensive Review on Advanced Driver Assistance System". Journal of Soft Computing Paradigm, 4(2):69-81, 2022. doi: 10.36548/jscp.2022.2.003
[3] D.A. Abbink, T. Carson, M. Mulder, J.C.F. de Winter, F. Aminravan, T.L. Gibo, and E.R. Boer. "A topology of shared control systems: Finding common ground in diversity". IEEE Transactions on Human-Machine Systems, 48(5), 509-525, 2018. doi: 10.1109/THMS.2018.2791570
[4] C.A. DeGuzman, and B. Donmez. "Knowledge of and trust in advanced driver assistance systems". Accident Analysis and Prevention 156, 2021. doi: 10.1016/j.aap.2021.106121
[5] M. Abe. "Vehicle handling dynamics: Theory and application". Elsevier Ltd. Second Edition, 2015.
[6] G. Mastinu, G. Previati, F. Della Rossa, M. Gobbi, and M. Fainello. "How Drivers Lose Control of the Car". SAE International Journal of Vehicle Dynamics Stability and NVH, 8(1):99-121, 2024. doi: 10.4271/10-08-01-0007.
[7] P. Penmetsa, S.S. Pulugurtha, and V. R. Duddu. "Factors associated with crashes due to overcorrection or oversteering of vehicles". IATSS Research, 42, 24-29, 2018. doi: 10.1016/j.iatssr.2017.06.001.
[8] M. Damian, B. Shyrokau, X. Carrera, R. Happee. "Experimental Validation of Torque-Based Control for Realistic Handwheel Haptics in Driving Simulators". IEEE Transactions on Vehicular Technology, 42(1), 2022. Doi: 10.1109/TVT.2021.3125749

## Claims

1. A computer-implemented method for controlling a vehicle in a handling limit condition by a driver assistance system of the vehicle, the method comprising:
- providing (S10) a model of said vehicle, the model being configured to model dynamics of the vehicle using one or more state variables (x);
- one or more iterations of:
∘ predicting (S20), over a time horizon (*Nₚ*), a behavior of the one or more state variables based on the provided model;
∘ detecting (S30) a handling limit condition for the vehicle in the time horizon based on the predicted behavior; and
∘ sending (S40) a feedback signal to a driver based on the detected handling limit condition, the feedback signal being modulated based on a degree of the detected handling limit condition.

2. The method of claim 1, each iteration further comprising:
- receiving, from a driver, an input signal; and
- controlling the vehicle in the determined handling limit condition at least partially based on the received input signal.

3. The method of claim 2, wherein the controlling the vehicle at least partially based on the received input signal comprises:
- computing an assistive control signal; and
- applying the computed assistive control signal to the vehicle;
wherein the received input signal from a driver comprises one or more of:
∘ a driver torque applied by the driver to a steering unit of the vehicle, and
∘ a driver acceleration signal and/or a braking signal applied to an operation member of the vehicle, and
wherein the computed assistive control signal comprises one or more of:
∘ an assistive torque to be applied to the steering unit of the vehicle in addition to the driver torque, and
∘ an assistive acceleration signal and/or the assistive braking signal to be applied to the vehicle in addition to the driver acceleration signal and/or the driver braking signal.

4. The method of any preceding claim, wherein the predicting of the behavior of the one or more state variables comprises minimizing a cost function using Model Predictive Control (MPC), the cost function comprising terms tending to minimize a difference, over a plurality of samples in the time horizon, between a value of, or a value of a time derivative of, at least one state variable of the one or more state variables and a respective reference value for said at least one state variable, or respectively a reference value of the time derivative of said at least one state variable, preferably the cost function further comprising terms penalizing a norm of a value or a value of a time derivative of at least one state variable of the one or more state variables.

5. The method of claim 4, wherein the cost function is of a type $J = {\sum }_{k = 1}^{N} \left(\begin{matrix}{\left‖δ-{δ}_{ref}\right‖}_{{W}_{1}}^{2} + {\left‖{F}_{x}-{F}_{xref}\right‖}_{{W}_{2}}^{2} + {\left‖\dot{δ}-{\dot{δ}}_{ref}\right‖}_{{W}_{3}}^{2} + {\left‖{\dot{F}}_{x}-{\dot{F}}_{x , ref}\right‖}_{{W}_{4}}^{2} + \\ {\left‖\dot{δ}\right‖}_{{W}_{5}}^{2} + {\left‖{\dot{F}}_{x}\right‖}_{{W}_{6}}^{2}\end{matrix}\right)$ wherein
- *δ* denotes an actual steering angle,
- *δ_{ref}* denotes a reference steering angle,
- *Fₓ = (F_{xf}, Fₓᵣ)* denotes a longitudinal force vector for the front and rear wheels, *F_{xf},* and *Fₓᵣ,* respectively,
- *F_{xref}* = (*F_{xf,ref}, F_{xr,ref}*) denotes a reference longitudinal force vector for the front and rear wheels, *F_{xf,ref},* and *F_{xr,ref},* respectively,
- *Ẋ* denotes a time derivative of a vector *X,*
- ${\left‖X\right‖}_{w}^{2}$ denotes a weighted norm of a vector X defined as (*X, wX*)*, wX* being a scalar product of said vector *X* by a scalar *w,* and (*X, Z*) being a dot product between a vector *Y* and a vector *Z,* and
- *W* = (*W*₁, *W*₂, *W*₃, *W*₄, *W*₅, *W*₆) denotes a weight vector.

6. The method of any of claims 1 to 5, wherein
- the predicting of a behavior of the one or more state variables comprises predicting, over said time horizon:
∘ a sideslip angle of the vehicle (β),
∘ a slip angle (*αᵣ*) of at least one tire of the vehicle, and
∘ a sliding slip angle *(α^{sl}*) of said at least one tire; and
- the detecting of a handling limit condition comprises, over said time horizon:
∘ detecting a saturation of said at least one tire based on the predicted slip angle of said at least one tire with respect to the predicted sliding slip angle of said at least one tire, and
∘ detecting if the predicted sideslip angle of the vehicle exceeds a sideslip threshold.

7. The method of claim 6, wherein the sending a feedback signal based on the detected handling limit condition comprises:
- sending a first feedback signal when the method has detected a first degree of the handling limit condition in which the predicted slip angle of said at least one tire is saturated, and the predicted sideslip angle of the vehicle is below said sideslip threshold, and
- sending a second feedback signal when the method has detected a second degree of the handling limit condition in which the predicted slip angle of said at least one tire is saturated, and the predicted sideslip angle the vehicle is above said sideslip threshold.

8. The method of any of claims 6 or 7, wherein:
- the handling limit condition is an oversteering condition, said at least one tire is a rear tire of the vehicle, or
- the handling limit condition is an understeering condition, said at least one tire is a front tire of the vehicle.

9. The method of any of claims 6 to 8, wherein the detecting a saturation of said at least one tire based on the predicted slip angle of said at least one tire comprises determining if the predicted value of a slip angle of said at least one tire is above a predicted value of a sliding slip angle (α^{sl}) of said at least one tire for a time duration of the time horizon .

10. The method of any preceding claim, wherein the sending a feedback signal to a driver comprises one or more of:
- emitting an audio signal,
- displaying a visual representation of the determined handling limit condition, and
- sending haptic vibration signals, on a steering unit, a driver's seat and/or a pedal of the vehicle.

11. The method of claim 10, when dependent on any of claims 7 to 9, wherein the second signal has a frequency and/or an amplitude higher than of the first signal, preferably said frequency and/or said amplitude being two times as high as of the first signal.

12. A computer program comprising instructions for performing the method according to any preceding claim.

13. A computer-readable medium memory having recorded thereon the computer program of claim 12.

14. A driver assistance system comprising a processor coupled to a memory, the memory having recorded thereon the computer program of claim 12.

15. A vehicle comprising a driver assistance system according to claim 14.

## Amended claims

### Amended claims in accordance with Rule 137(2) EPC.

**1.** A computer-implemented method for controlling a vehicle in a handling limit condition by a driver assistance system of the vehicle, the method comprising:
- providing (S10) a model of said vehicle, the model being configured to model dynamics of the vehicle using one or more state variables (x);
- one or more iterations of:
o predicting (S20), over a time horizon (*Nₚ*), a behavior of the one or more state variables based on the provided model;
o detecting (S30) a handling limit condition for the vehicle in the time horizon based on the predicted behavior; and
o sending (S40) a feedback signal to a driver based on the detected handling limit condition, the feedback signal being modulated based on a degree of the detected handling limit condition;
**characterized in that**:
the sending a feedback signal to a driver comprises sending haptic vibration signals, on a steering unit, a driver's seat and/or a pedal of the vehicle.

**2.** The method of claim 1, each iteration further comprising:
- receiving, from a driver, an input signal; and
- controlling the vehicle in the determined handling limit condition at least partially based on the received input signal.

**3.** The method of claim 2, wherein the controlling the vehicle at least partially based on the received input signal comprises:
- computing an assistive control signal; and
- applying the computed assistive control signal to the vehicle;
wherein the received input signal from a driver comprises one or more of:
o a driver torque applied by the driver to a steering unit of the vehicle, and
o a driver acceleration signal and/or a braking signal applied to an operation member of the vehicle, and
wherein the computed assistive control signal comprises one or more of:
o an assistive torque to be applied to the steering unit of the vehicle in addition to the driver torque, and
o an assistive acceleration signal and/or the assistive braking signal to be applied to the vehicle in addition to the driver acceleration signal and/or the driver braking signal.

**4.** The method of any preceding claim, wherein the predicting of the behavior of the one or more state variables comprises minimizing a cost function using Model Predictive Control (MPC), the cost function comprising terms tending to minimize a difference, over a plurality of samples in the time horizon, between a value of, or a value of a time derivative of, at least one state variable of the one or more state variables and a respective reference value for said at least one state variable, or respectively a reference value of the time derivative of said at least one state variable, preferably the cost function further comprising terms penalizing a norm of a value or a value of a time derivative of at least one state variable of the one or more state variables.

**5.** The method of claim 4, wherein the cost function is of a type $J = {\sum }_{k = 1}^{N} \left(\begin{matrix}{\left‖δ-{δ}_{ref}\right‖}_{{W}_{1}}^{2} + {\left‖{F}_{x}-{F}_{xref}\right‖}_{{W}_{2}}^{2} + {\left‖\dot{δ}-{\dot{δ}}_{ref}\right‖}_{{W}_{3}}^{2} + {\left‖{\dot{F}}_{x}-{\dot{F}}_{x , ref}\right‖}_{{W}_{4}}^{2} + \\ {\left‖\dot{δ}\right‖}_{{W}_{5}}^{2} + {\left‖{\dot{F}}_{x}\right‖}_{{W}_{6}}^{2}\end{matrix}\right)$ wherein
- *δ* denotes an actual steering angle,
- *δ_{ref}* denotes a reference steering angle,
- *Fₓ =* (*F_{xf}, Fₓᵣ*) denotes a longitudinal force vector for the front and rear wheels, *F_{xf}*, and *Fₓᵣ,* respectively,
- *F_{xref} =* (*F_{xf,ref}, F_{xr,ref}*) denotes a reference longitudinal force vector for the front and rear wheels, *F_{xf,ref},* and *F_{xr,ref},* respectively,
- *Ẋ* denotes a time derivative of a vector *X,*
- ${\left‖X\right‖}_{w}^{2}$ denotes a weighted norm of a vector X defined as (*X, wX*), *wX* being a scalar product of said vector *X* by a scalar w, and (*X, Z*) being a dot product between a vector Y and a vector Z, and
- *W =* (*W*₁, *W*₂, *W*₃, *W*₄, *W*₅, *W*₆) denotes a weight vector.

**6.** The method of any of claims 1 to 5, wherein
- the predicting of a behavior of the one or more state variables comprises predicting, over said time horizon:
o a sideslip angle of the vehicle (β),
o a slip angle (*αᵣ*) of at least one tire of the vehicle, and
o a sliding slip angle (*α^{sl}*) of said at least one tire; and
- the detecting of a handling limit condition comprises, over said time horizon:
o detecting a saturation of said at least one tire based on the predicted slip angle of said at least one tire with respect to the predicted sliding slip angle of said at least one tire, and
o detecting if the predicted sideslip angle of the vehicle exceeds a sideslip threshold.

**7.** The method of claim 6, wherein the sending a feedback signal based on the detected handling limit condition comprises:
- sending a first feedback signal when the method has detected a first degree of the handling limit condition in which the predicted slip angle of said at least one tire is saturated, and the predicted sideslip angle of the vehicle is below said sideslip threshold, and
- sending a second feedback signal when the method has detected a second degree of the handling limit condition in which the predicted slip angle of said at least one tire is saturated, and the predicted sideslip angle the vehicle is above said sideslip threshold.

**8.** The method of any of claims 6 or 7, wherein:
- the handling limit condition is an oversteering condition, said at least one tire is a rear tire of the vehicle, or
- the handling limit condition is an understeering condition, said at least one tire is a front tire of the vehicle.

**9.** The method of any of claims 6 to 8, wherein the detecting a saturation of said at least one tire based on the predicted slip angle of said at least one tire comprises determining if the predicted value of a slip angle of said at least one tire is above a predicted value of a sliding slip angle (α^{sl}) of said at least one tire for a time duration of the time horizon .

**10.** The method of any preceding claim, wherein the sending a feedback signal to a driver comprises one or more of:
- emitting an audio signal, and
- displaying a visual representation of the determined handling limit condition.

**11.** The method of claim 10, when dependent on any of claims 7 to 9, wherein the second signal has a frequency and/or an amplitude higher than of the first signal, preferably said frequency and/or said amplitude being two times as high as of the first signal.

**12.** A computer program comprising instructions for performing the method according to any preceding claim.

**13.** A computer-readable medium memory having recorded thereon the computer program of claim 12.

**14.** A driver assistance system comprising a processor coupled to a memory, the memory having recorded thereon the computer program of claim 12.

**15.** A vehicle comprising a driver assistance system according to claim 14.

**1.** A computer-implemented method for controlling a vehicle in a handling limit condition by a driver assistance system of the vehicle, the method comprising:
- providing (S10) a model of said vehicle, the model being configured to model dynamics of the vehicle using one or more state variables (x);
- one or more iterations of:
o predicting (S20), over a time horizon (*N_{g}*), a behavior of the one or more state variables based on the provided model;
o detecting (S30) a handling limit condition for the vehicle in the time horizon based on the predicted behavior; and
o sending (S40) a feedback signal to a driver based on the detected handling limit condition, the feedback signal being modulated based on a degree of the detected handling limit condition;
**characterized in that**:
the predicting of the behavior of the one or more state variables comprises minimizing a cost function using Model Predictive Control (MPC), the cost function comprising terms tending to minimize a difference, over a plurality of samples in the time horizon, between a value of, or a value of a time derivative of, at least one state variable of the one or more state variables and a respective reference value for said at least one state variable, or respectively a reference value of the time derivative of said at least one state variable, preferably the cost function further comprising terms penalizing a norm of a value or a value of a time derivative of at least one state variable of the one or more state variables.

**2.** The method of claim 1, each iteration further comprising:
- receiving, from a driver, an input signal; and
- controlling the vehicle in the determined handling limit condition at least partially based on the received input signal.

**3.** The method of claim 2, wherein the controlling the vehicle at least partially based on the received input signal comprises:
- computing an assistive control signal; and
- applying the computed assistive control signal to the vehicle;
wherein the received input signal from a driver comprises one or more of:
o a driver torque applied by the driver to a steering unit of the vehicle, and
o a driver acceleration signal and/or a braking signal applied to an operation member of the vehicle, and
wherein the computed assistive control signal comprises one or more of:
o an assistive torque to be applied to the steering unit of the vehicle in addition to the driver torque, and
o an assistive acceleration signal and/or the assistive braking signal to be applied to the vehicle in addition to the driver acceleration signal and/or the driver braking signal.

**4.** The method of any of claims 1 to 3, wherein the cost function is of a type $J = {\sum }_{k = 1}^{N} \left(\begin{matrix}{\left‖δ-{δ}_{ref}\right‖}_{{W}_{1}}^{2} + {\left‖{F}_{x}-{F}_{xref}\right‖}_{{W}_{2}}^{2} + {\left‖\dot{δ}-{\dot{δ}}_{ref}\right‖}_{{W}_{3}}^{2} + {\left‖{\dot{F}}_{x}-{\dot{F}}_{x , ref}\right‖}_{{W}_{4}}^{2} + \\ {\left‖\dot{δ}\right‖}_{{W}_{5}}^{2} + {\left‖{\dot{F}}_{x}\right‖}_{{W}_{6}}^{2}\end{matrix}\right)$ wherein
- *δ* denotes an actual steering angle,
- *δ_{ref}* denotes a reference steering angle,
- *Fₓ =* (*F_{xf}, Fₓᵣ*) denotes a longitudinal force vector for the front and rear wheels, *F_{xf},* and *Fₓᵣ,* respectively,
- *F_{xref} =* (*F_{xf,ref}, F_{xr,ref}*) denotes a reference longitudinal force vector for the front and rear wheels, *F_{xf,ref},* and *F_{xr,ref},* respectively,
- *Ẋ* denotes a time derivative of a vector *X,*
- ${\left‖X\right‖}_{w}^{2}$ denotes a weighted norm of a vector X defined as (*X, wX*), *wX* being a scalar product of said vector *X* by a scalar *w*, and (*X, Z*) being a dot product between a vector *Y* and a vector *Z*, and
- *W =* (*W*₁, *W*₂, *W*₃, *W*₄, *W*₅, *W*₆) denotes a weight vector.

**5.** The method of any of claims 1 to 4, wherein
- the predicting of a behavior of the one or more state variables comprises predicting, over said time horizon:
o a sideslip angle of the vehicle (β),
o a slip angle (*αᵣ*) of at least one tire of the vehicle, and
o a sliding slip angle (*α^{sl}*) of said at least one tire; and
- the detecting of a handling limit condition comprises, over said time horizon:
o detecting a saturation of said at least one tire based on the predicted slip angle of said at least one tire with respect to the predicted sliding slip angle of said at least one tire, and
o detecting if the predicted sideslip angle of the vehicle exceeds a sideslip threshold.

**6.** The method of claim 5, wherein the sending a feedback signal based on the detected handling limit condition comprises:
- sending a first feedback signal when the method has detected a first degree of the handling limit condition in which the predicted slip angle of said at least one tire is saturated, and the predicted sideslip angle of the vehicle is below said sideslip threshold, and
- sending a second feedback signal when the method has detected a second degree of the handling limit condition in which the predicted slip angle of said at least one tire is saturated, and the predicted sideslip angle the vehicle is above said sideslip threshold.

**7.** The method of any of claims 5 or 6, wherein:
- the handling limit condition is an oversteering condition, said at least one tire is a rear tire of the vehicle, or
- the handling limit condition is an understeering condition, said at least one tire is a front tire of the vehicle.

**8.** The method of any of claims 5 to 7, wherein the detecting a saturation of said at least one tire based on the predicted slip angle of said at least one tire comprises determining if the predicted value of a slip angle of said at least one tire is above a predicted value of a sliding slip angle (α^{sl}) of said at least one tire for a time duration of the time horizon .

**9.** The method of any preceding claim, wherein the sending a feedback signal to a driver comprises one or more of:
- emitting an audio signal,
- displaying a visual representation of the determined handling limit condition, and
- sending haptic vibration signals, on a steering unit, a driver's seat and/or a pedal of the vehicle.

**10.** The method of claim 9, when dependent on any of claims 6 to 8, wherein the second signal has a frequency and/or an amplitude higher than of the first signal, preferably said frequency and/or said amplitude being two times as high as of the first signal.

**11.** A computer program comprising instructions for performing the method according to any preceding claim.

**12.** A computer-readable medium memory having recorded thereon the computer program of claim 11.

**13.** A driver assistance system comprising a processor coupled to a memory, the memory having recorded thereon the computer program of claim 11.

**14.** A vehicle comprising a driver assistance system according to claim 13.
